# EUROPÄISCHE PATENTANMELDUNG

(11) **EP 4 357 390 A1**
(43) Veröffentlichungstag der Anmeldung: **24.04.2024**
(21) Anmeldenummer: 22202168.5
(22) Anmeldetag: 18.10.2022
(51) Int. Cl.: C08G 64/02, C08G 64/42, C04B 26/06, C04B 26/18, C08L 69/00, C04B 26/16, C08G 18/44

(54) **BIOGENE METHACRYLATE AUF BASIS VON POLYCARBONATDIOLEN ALS REAKTIVE HARZE FÜR DIE HÄRTUNG VON REAKTIVHARZEN**

(71) Anmelder: Hilti Aktiengesellschaft, 9494 Schaan (LI)
(72) Erfinder: Plenk, Christian, 86916 Kaufering (DE); Jaehnichen, Klaus, 01187 Dresden (DE); Komber, Hartmut, 01217 Dresden (DE); Voit, Brigitte, 01187 Dresden (DE)
(74) Vertreter: Hilti Aktiengesellschaft Corporate Intellectual Property

(57) **Zusammenfassung**

Beschrieben wird ein Reaktivharz, umfassend wenigstens ein Basisharz, welches ein Methacrylat auf Basis von Polycarbonatdiolen umfasst, und dessen Verwendung in der chemischen Befestigung. Ferner wird eine das Reaktivharz enthaltende Reaktivharzkomponente sowie ein Zweikomponenten-System, enthaltend die Reaktivharzkomponente, beschrieben.

## Beschreibung

Die vorliegende Erfindung betrifft ein Reaktivharz, umfassend wenigstens ein Basisharz, welches ein Methacrylat auf Basis von Polycarbonatdiolen umfasst, und dessen Verwendung in der chemischen Befestigung. Ferner betrifft die vorliegende Erfindung eine das Reaktivharz enthaltende Reaktivharzkomponente sowie ein Zweikomponenten-System, enthaltend die Reaktivharzkomponente.

Die Verwendung von Reaktivharzmörteln auf Basis radikalisch härtbarer Verbindungen als Bindemittel ist seit langem bekannt. Im Bereich der Befestigungstechnik hat sich die Verwendung von Reaktivharzen als organische Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente das Reaktivharz und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch Reaktion von monomeren oder polymeren aromatischen Diisocyanaten und Hydroxy-substituierte Methacrylaten, wie Hydroxyalkylmethacrylat, erhältlich sind. Die EP 0713015 B1 beispielsweise beschreibt Dübelmassen mit ungesättigten Polyesterharzen, Vinylesterharzen einschließlich Vinylesterurethanharzen als Basisharzen. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Zahlreiche Versuche, den Anteil an Kohlenstoff aus nachwachsenden Rohstoffen in Mörtelsystemen für die chemische Befestigung zu erhöhen, sind bereits bekannt.

So werden in der DE 10 2014 103 923 A1 biogene Reaktivverdünner (RV) und reaktive Harze auf Basis von (Meth)Acrylaten OH-Gruppen-haltiger Pflanzenöle, Zucker, biogener Heterocyclen, Glyzerin und ungesättigter Polyesterharze beschrieben. Ein bevorzugtes Grundharz ist ein Bisphenol-A basiertes Methacrylat (Bis-GMA).

Zur Erhöhung der biogenen Anteile in der Mischung werden dem Reaktivharz auch biogene Füllstoffe wie z.B. Mehle von Kernen oder Schalen bekannter Früchte (Walnüsse, Kirschen, Oliven), oder von Pflanzenfasern, Ligninen, Tanninen, Polysacchariden oder Zucker zugesetzt, wie in der DE 10 2014 103 924 A1 beschrieben. Biogene nichtreaktive Verdünner, z.B. Pflanzenöle, können ebenfalls zur weiteren Erhöhung des biogenen Anteils in der Harzmischung eingesetzt werden, wie in der DE 10 2014 103 920 A1 beschrieben. So ist etwa die Verwendung von Pflanzenöl zur Phlegmatisierung des Peroxids in der Härterkomponente beschrieben.

Weitere geeignete biogene Ausgangsstoffe zur Herstellung reaktiver Komponenten sind beispielsweise Zuckerderivate. Die DE 10 2012 219 476 A1 beschreibt eine Harzmischung auf Basis eines Vinylesterurethanharzes, welches durch Umsetzung von Isosorbid-Derivaten mit Isocyanaten und Hydroxy-(Meth)acrylsäureestern erhalten wird.

Auch Itaconsäure-Derivate sind vielversprechende biogene Ausgangsstoffe, welche durch entsprechende Funktionalisierung zu reaktiven Komponenten für Reaktivharze umgesetzt werden können. Harzzusammensetzungen auf Vinylester-Basis, welche Methacrylat-Derivate und Itaconsäureester als Reaktivverdünner enthalten, sind bekannt. Die WO 2010/108939 A1 beschreibt ein Reaktivharz auf Vinylester-Basis mit reduzierter Viskosität, die dadurch erreicht werden kann, dass der Reaktivverdünner teilweise durch einen Itaconsäureester ersetzt wird. Nachteilig an dem beschriebenen Reaktivharz ist, dass die Reaktivität des Reaktivharzes und dessen Durchhärtung nicht immer gewährleistet ist.

Die DE 10 2012 219 652 A1 beschreibt ebenfalls Reaktivharzkomponenten, welche funktionalisierte Itaconsäure-Derivate als Reaktivverdünner enthalten.

Die Verwendung biogener Itaconsäure-Alkandiol-Oligomerer als reaktive Zusatzstoffe zu härtbaren Vinylesterharzen für Chemiemörtel ist in der EP 3 489 267 A1 beschrieben.

Die WO 14/064097 A1 beschreibt die Verwendung von einem Vinylesterurethanharz auf Basis einer Dianhydrohexitol-Verbindung, wie Isosobid, Isomannit oder Isoidid.

Die genannten Dokumente umfassen jedoch keine methacrylierten Polycarbonatdiole wie in der vorliegenden Anmeldung beschrieben. Ferner fehlt bisher die Möglichkeit, die hoch bzw. höherviskosen petrol-basierten Basisharze durch biogene Basisharze teilweise oder sogar vollständig zu ersetzen, um den biogenen Anteil der Zusammensetzungen weiter zu erhöhen. Gesellschaftlich und klimatechnisch ist es ein Vorteil, nachwachsende Rohstoffe zu verwenden. So ist der Carbon Footprint von Produkten und auch Rohstoffen inzwischen eine technische Maßzahl, durch welche sich Produkte charakterisieren und unterscheiden lassen. Durch Kombination neuer biogener Rohstoffe mit kommerziell verfügbaren (wie z.B. Isobornylmethacrylat) kann der biogene Anteil im Basisharz und damit auch in den Zusammensetzungen signifikant erhöht werden.

Es besteht somit Bedarf an einem Reaktivharz, dessen Basisharz zu einem großen Teil aus Bestandteilen besteht, die auf Basis nachwachsender Rohstoffe erhältlich sind und mit denen die Lagerstabilität und Reaktivität des Reaktivharzes und der daraus hergestellten Reaktivharzkomponente entsprechend der jeweiligen Verwendung gesteuert werden kann.

Dies kann durch ein Reaktivharz nach Anspruch 1 und einer Reaktivharzkomponente nach Anspruch 8 gelöst werden. Des Weiteren betrifft die vorliegende Erfindung ein Mehrkomponenten-System nach Anspruch 11, welches die erfindungsgemäße Reaktivharzkomponente enthält, sowie die Verwendung eines Methacrylats auf der Basis von Polycarbonatdiolen als Basisharz nach Anspruch 14. Bevorzugte Ausführungsformen sind den Unteransprüchen zu entnehmen.

Zum besseren Verständnis der vorliegenden Erfindung werden die folgenden Erläuterungen der hierin verwendeten Terminologie als sinnvoll erachtet. Im Sinne der Erfindung bedeuten:
- "*Basisharz"* ein üblicherweise festes oder hochviskoses radikalisch polymerisierbares Harz, welches durch Polymerisation (z.B. nach Zugabe eines Initiators in Gegenwart eines Beschleunigers) härtet; das Basisharz kann eine einzelne Verbindung oder eine Mischung aus mehreren unterschiedlichen Verbindungen sein;
- *"Reaktivharz-Masterbatch"* das Reaktionsprodukt der Reaktion zur Herstellung des Basisharzes, also typischerweise eine Mischung aus Basisharz, Stabilisator und weiteren Bestandteilen der Reaktionsmischung;
- "*Reaktivharz"* eine Mischung aus Reaktivharz-Masterbatch, einem Beschleuniger und einem Inhibitor (auch als Beschleuniger-Inhibitor-System bezeichnet), einem Reaktivverdünner und gegebenenfalls weiteren Additiven; das Reaktivharz ist typischerweise flüssig oder viskos und kann zu einer Reaktivharzkomponente weiterverarbeitet werden;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet - die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Basisharze, welche andere Basisharze oder den Reaktivharz-Masterbatch verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- "*Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die als Härtungsmittel einen Initiator für die Polymerisation eines Basisharzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- "*Zweikomponenten-System"* bzw. "*Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Basisharzes erst nach dem Mischen der beiden Komponenten erfolgt;
- "*Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Basisharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..."-Verbindungen gemeint;
- *"(Meth)acrylat"* ein Ester der (Meth)acrylsäure (auch "(Meth)acrysäureester"), z.B. Methacrylsäuremethylester oder Methylmethacrylat;
- *"biogen",* auch häufig als biobasiert bezeichnet, auf Basis aus nachwachsenden Rohstoffen gewinnbar; zur Bewertung des Anteils an biogenen Rohstoffen wird üblicherweise der Anteil biogenen Kohlenstoffs, nachgewiesen durch die ¹⁴C-Methode, ermittelt; da das Verhältnis der Kohlenstoffisotope noch nach dem Produktionsprozess bestimmt werden kann, ist eine Unterscheidung zwischen fossiler und biogener Biomasse möglich;
- *"petro-basiert"* auf Basis von fossilen Brennstoffen gewinnbar;
- *"ein", "eine", "einer"* als Artikel vor einer chemischen Verbindungsklasse, z.B. vor dem Wort "Methacrylat", dass eine oder mehrere unter diese chemische Verbindungsklasse fallende Verbindungen, z.B. verschiedene Methacrylsäureester, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- "*etwa"* oder *"circa"* oder "*ca*." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. *"von 100°C bis 120°C",* dass die beiden Eckwerte und jeder Wert innerhalb dieses Bereichs einzeln offenbart sind.

Alle in diesem Text genannten Normen (z.B. DIN-Normen oder ISO-Normen) wurden, falls nicht ausdrücklich anders angegeben, in der zum Anmeldetag dieser Anmeldung aktuellen Ausgabe verwendet.

Die vorliegende Anmeldung beschreibt unter anderem die Synthese reaktiver, zumindest teilweise biogener, oligomerer oder niedermolekularer Produkte aus Polycarbonatdiolen. Diese reaktiven Produkte sind geeignet für die Anwendung als Vernetzer oder Harzgrundkörper in radikalisch initiierten härtbaren Harzen und daraus hergestellten Chemiemörteln, aber auch für den Einsatz als photohärtbare Materialien oder anderen dem Chemiker vertrauten Anwendungen von Methacrylaten.

Die reaktiven Verbindungen werden entweder erhalten durch Umesterung von Methacrylsäuremethylester mit Polycarbonatdiolen auf Basis von Zuckerderivaten mit cyclischen Etherstrukturen, insbesondere solche mit mehreren cyclischen Etherstrukturen, ganz besonders bevorzugt Isosorbid, wie sie beispielsweise in der EP 3 159 366 A1 und der EP 3 029 086 A1 beschrieben sind, und Alkandiolen (z.B. HSB-Benebiol^{®}-Typen), wie sie beispielsweise in der EP 3162 834 A1 beschrieben sind, oder durch die Reaktion dieser Polycarbonatdiole mit 2-Isocyanatoethylmethacrylat zu den entsprechenden Urethanmethacrylaten. Die erhaltenen Produkte können nach Aufarbeitung direkt als reaktive Zusätze verwendet werden, z.B. auch als Zusatz zu kalt härtbaren Harzmischungen. Durch den Zusatz der erhaltenen MethacrylatVerbindungen erhöht sich der Anteil biogener Komponenten im Reaktivharz deutlich.

Ein erster Gegenstand der vorliegenden Erfindung ist ein Reaktivharz, umfassend wenigstens ein Basisharz, welches ein Methylmethacrylat auf Basis von Polycarbonatdiolen umfasst. Insbesondere beinhaltet das Reaktivharz keine anderen, weiteren Basisharze, so dass das Methacrylat auf Basis von Polycarbonatdiolen das einize Basisharz ist. Dennoch sind Ausführungsformen möglich, bei denen eine Mischung aus wenigstens einem Methylmethacrylat auf Basis von Polycarbonatdiolen und den üblicherweise für die chemische Befestigung verwendeten bzw. geeigneten Methacrylatverbindungen als Basisharz verwendet wird.

Ein Hauptbestandteil des erfindungsgemäßen Reaktivharzes ist somit ein Basisharz, welches ein Methacrylat auf Basis von Polycarbonatdiolen oder Alkandiolen enthält und bevorzugt aus einem Methacrylat auf Basis von Polycarbonatdiolen besteht.

### Methacrylate auf Basis von Polycarbonatdiolen

Die vorliegende Erfindung beschreibt die Methacrylierung von Polycarbonatdiolen durch Umesterung mit Methacrylsäuremethylester und alternativ die Reaktion von Polycarbonatdiolen mit 2-lsocyanatoethylmethacrylat zur Bildung von Urethanmethacrylaten. Bei der Umesterung der Polycarbonatdiole mit einem Überschuss an Methylacrylsäuremethylester in Gegenwart eines Katalysators (bevorzugt K₃PO₄) erfolgt ein sehr starker Abbau der ursprünglichen Polymere innerhalb kurzer Reaktionszeiten von 6 bis 8 Stunden. Durch Wahl einer kürzeren Reaktionszeit, kann der Anteil reaktiver langkettiger Spezies in der Mischung erhöht werden, d.h. die Reaktionszeiten beeinflussen direkt die Zusammensetzung der Produktmischung. Als Ergebnis der Reaktion nach 8 Stunden Umesterung wurde ein Gemisch verschiedener Methacrylate unterschiedlicher Struktur und Kettenlänge erhalten. Neben Isosorbiddimethacrylat entstanden die entsprechenden Alkandioldimethacrylate und Monomethacrylate der Alkandiole, wobei die zweiten OH-Gruppe mit einer Methylcarbonatgruppe blockiert ist, sowie reaktive Oligocarbonate. Auch diese Oligocarbonate besitzen teilweise mit einer Methylcarbonatgruppe blockierte Endgruppen.

Die genaue Zusammensetzung der Produkte wird bestimmt durch die Natur der in den Polycarbonatdiolen verwendeten Alkandiole. Das in den Beispielen verwendete Benebiol^{®} HS0840B, ein Polycarbonatdiol aus Isosorbid (40 mol%) und 1,4-Butandiol, ergibt vor allem Isosorbiddimethacrylat (max. 48 Gew.-%), 1,4-Butandioldimethacrylat (1,4-BDDMA, 16 Gew.-%), 4-Methylcarbonato-butylmethacrylat (14 Masse-%), der Rest (22 Gew.-%) sind oligomere Spezies mit Methacrylatgruppen und auch Methylcarbonatendgruppen. Dagegen wurde bei der Umesterung mit dem ebenfalls in den Beispielen verwendete Benebiol^{®} HS0840H (Polycarbonatdiol aus 40 mol-% Isosorbid und 1,6-Hexandiol) vor allem Isosorbiddimethacrylat (40 Gew.-%), 6-Methylcarbonato-hexylmethacrylat, wenig Hexandioldimethacrylat (zusammen 14Gew.- %) erhalten, der Rest (22 Gew.-%) sind ebenfalls oligomere Spezies mit Methacrylatgruppen und ebenfalls Methylcarbonatendgruppen. Diese Produkte wurden härtbaren Harzmischungen zugesetzt. Diese Harzmischungen wurden zur Herstellung von Chemiemörteln verwendet und nach der Härtung die mechanischen Eigenschaften der Verbunde ermittelt. Sowohl bei den ermittelten Gelzeiten (Verarbeitungsfenster bis zum Eintritt des Härtens) als auch bei den bestimmten Referenzverbundspannungen zeigten die neuen Produkte hervorragende Eigenschaften vergleichbar dem petro-basierten Referenzharz. Somit kann der Anteil der biogenen Komponenten ohne Leistungseinbußen bei den Chemiemörteln weiter erhöht werden.

Für die Herstellung von Polycarbonatdiolen mit Methacrylatendgruppen ohne Abbau der Polymerkette wurden die Polycarbonatdiole mit 2-lsocyanatoethylmethacrylat umgesetzt. Aceton wurde als Lösemittel zur Verringerung der Viskosität der Reaktionsmischung zugesetzt. Für eine schnellere Durchmischung des Acetons und des Polycarbonatdiols ist es vorteilhaft, das Aceton mit dem Stabilisator Phenothiazin und dem Inhibitor Tempol zuerst einzuwiegen. Nach Zugabe des Acetons wurde das Polycarbonatdiol zugegeben, wobei dieses vorteilhafterweise im Trockenschrank auf 40°C bis 50 °C erwärmt wurde. Es wurde bis zum Erhalt einer homogenen Mischung bei 40 °C bis 50°C weitergerührt. Nach Zugabe des Katalysators wurde das Isocyanat bei Raumtemperatur unter Rühren zugetropft, die Mischung bei RT gerührt, anschließend auf 40°C, 50°C bzw. 55 °C erhitzt, bis mittels ATR-FTIR-Spektroskopie keine NCO-Gruppen mehr nachweisbar waren. Nach Ende der Reaktion wurde das Aceton im Rotationsverdampfer abgezogen und das restliche Aceton im Ölpumpenvakuum (< 1 mbar) abgezogen. Anschließend kann das Produkt als Zusatz für Harzmischungen verwendet werden.

Die genannten erhaltenen Produktgemische können direkt für Applikationstests eingesetzt werden. Dabei können die üblicherweise verwendeten petro-basierten Basisharze teilweise oder vollständig durch die Zuckerderivate ersetzt werden. Dem Fachmann ist bekannt, dass gegebenenfalls Anpassungen bei den Mengen der anderen Komponenten der Reaktivharze und diese enthaltenden Zusammensetzungen, wie etwa Reaktivharzkomponenten, vorgenommen werden müssen, so dass die Zahl der Doppelbindungen in der Harzmischung insgesamt konstant bleibt.

Die hierin beschriebenen Zuckerderivate sind geeignet, das petro-basierte Basisharz bzw. die petro-basierten Verbindungen in Reaktivharzen für die chemische Befestigung teilweise oder ganz zu ersetzen, ohne dass Abstriche in den mechanischen Eigenschaften der ausgehärteten Harze in Kauf zu nehmen sind. Erfindungsgemäß umfasst das Basisharz in einer Ausführungsform petro-basierte Verbindungen und zusätzliche die hierin beschriebenen Zuckerderivate. In einer alternativen Ausführungsform umfasst erfindungsgemäß das Basisharz lediglich die hierin beschriebenen Zuckerderivate.

Wegen der hohen Viskositäten der erfindungsgemäßen Urethanmethacrylat-Polycarbonatdiole konnte überraschender Weise bei der Formulierung der Harzmischungen für die Chemiemörtel völlig auf den Zusatz des Basisharzes auf MDI verzichtet werden. Somit können die üblicherweise verwendeten petro-basierten Basisharze teilweise oder vollständig durch die Zuckerderivate ersetzt werden. Dem Fachmann ist bekannt, dass gegebenenfalls Anpassungen bei den Mengen der anderen Komponenten der Reaktivharze und diese enthaltenden Zusammensetzungen, wie etwa Reaktivharzkomponenten, vorgenommen werden müssen, so dass die Zahl der Doppelbindungen in der Harzmischung insgesamt konstant bleibt.

Überraschender Weise erreichen die neu formulierten Harzmischungen nach Härtung der Chemiemörtel mechanische Eigenschaften, die nur knapp unterhalb der Referenz liegen. So wurde z.B. unter Verwendung des Polycarbonatdiols Benebiol^{®} HS0840B bei den ausgehärteten Chemiemörteln 87% der Referenzverbundspannung für den Referenzmörtel bestimmt. Das ist ein überraschend hoher Wert, wenn man bedenkt, dass in diesen Chemiemörteln keinerlei petro-basierte Harzgrundkörper mit hohem Anteil an Aromaten enthalten ist. Besonders bevorzugt ist das Methacrylat auf Basis von Polycarbonatdiolen eines, das durch die Umsetzung der Polycarbonatdiole mit 2-Isocyanatoethylmethacrylat erhältlich ist, da es einen Harzgrundkörper mit sehr guten mechanischen Eigenschaften ergibt.

In einer Ausführungsform kann das erfindungsgemäße Reaktivharz zusätzlich zu den eben beschriebenen Methacrylaten auf der Basis von Polycarbonatdiolen die in Zusammensetzungen für die chemische Befestigung üblicherweise enthaltenen Basisharze enthalten.

Als Basisharz sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester, die in der erfindungsgemäßen Reaktivharzmischung verwendet werden können, werden in folgende Kategorien eingeteilt:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (I) 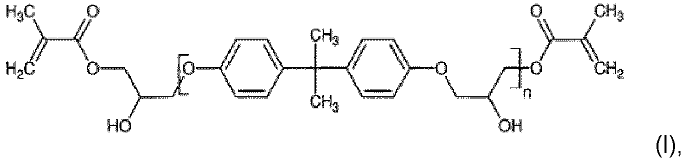 worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 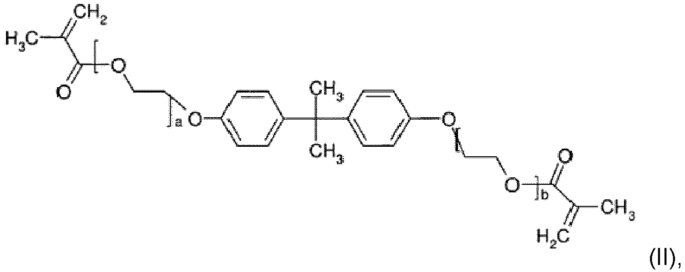 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, Methacryloylalkoxybenzolen bzw. Methacryloylalkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Bevorzugt enthält das Basisharz mindestens 80 Gew.-%, weiter bevorzugt mindestens 90 Gew.-%, besonders bevorzugt mindestens 95 Gew.-% des Methacrylats auf Basis von Polycarbonatdiolen oder von Alkandiolen, bezogen auf das Gesamtgewicht des Basisharzes. Gemäß einer besonders bevorzugten Ausführungsform besteht das Basisharz vollständig aus dem Methacrylat auf Basis von Polycarbonatdiolen oder von Alkandiolen.

Gemäß einer bevorzugten Ausführungsform der vorliegenden Erfindung beträgt Der prozentuale Anteil (in Gew.-% des Reaktivharzes) von Basisharz in dem erfindungsgemäßen Reaktivharz beträgt vorteilhafterweise mehr als etwa 5 Gew.-%, bevorzugt mehr als etwa 15 Gew.-%, und besonders bevorzugt mehr als etwa 20 Gew.-%. Der prozentuale Anteil (in Gew.-% des Reaktivharzes) von Basisharz in dem Reaktivharz beträgt vorteilhafterweise von etwa 5 Gew.-% bis etwa 90 Gew.-%, bevorzugt von etwa 8 Gew.-% bis etwa 80 Gew.-%, weiter bevorzugt von etwa 10 Gew.- % bis etwa 60 Gew.-%, noch weiter bevorzugt von etwa 20 Gew.-% bis etwa 55 Gew.- %, noch weiter bevorzugt von etwa 25 Gew.-% bis etwa 55 Gew.-%, besonders bevorzugt von etwa 25 Gew.-% bis etwa 50 Gew.-% und ganz besonders bevorzugt von etwa 30 Gew.-% bis etwa 45 Gew.-%.

### Reaktivverdünner

Neben dem Basisharz kann das Reaktivharz noch weitere niedrigviskose copolymerisierbare Verbindungen mit einer (Meth)acrylatgruppe als Reaktivverdünner enthalten. Geeignete Reaktivverdünner sind etwa in der EP 1 935 860 A1 und der DE 195 31 649 A1 beschrieben. Grundsätzlich können auch andere übliche Reaktivverdünner, allein oder im Gemisch mit (Meth)acrylsäureestern, eingesetzt werden, z. B. Styrol, α-Methylstyrol, alkylierte Styrole, wie *tert*-Butylstyrol, Divinylbenzol, Vinylether und/oder Allylverbindungen.

Vorzugsweise enthält die Reaktivharzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Glycerolformal(meth)acrylat; Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Gemäß einer Ausführungsform der vorliegenden Erfindung enthält das Reaktivharz jedoch mindestens einen biogenen Reaktivverdünner, um den Gehalt an biogenen Verbindungen weiter zu erhöhen. Geeignete Reaktivverdünner sind etwa in der EP 3 489 267 A1, EP 3 489 205 A1 und EP 3 272 777 A1 beschrieben.

Bevorzugt enthält das erfindungsgemäße Reaktivharz 10 bis 95 Gew.-%, weiter bevorzugt 20 Gew.-% bis 92 Gew.-%, noch weiter bevorzugt 40 bis 90 Gew.-%, besonders bevorzugt 50 Gew.-% bis 70 Gew.-% des mindestens einen Reaktivverdünners, bezogen auf das Gesamtgewicht des Reaktivharzes.

Hierbei ist der bei der hierin beschriebenen Synthese der Methacrylate aus oligomeren Polycarbonatdiolen, wie etwa Benebiol^{®} HS0840B und Benebiol^{®} HS0840H, gegebenenfalls enthaltene und/oder entstehende Reaktivverdünner zu berücksichtigen.

### Beschleuniger

Gemäß einer weiter bevorzugten Ausführungsform der Erfindung liegt das Reaktivharz in vorbeschleunigter Form vor, das heißt es enthält mindestens einen Beschleuniger für den Initiator, der als Härtungsmittel fungiert. Bevorzugte Beschleuniger sind aromatische Amine und/oder Salze von Kobalt, Mangan, Zinn, Vanadium oder Cer. Besonders vorteilhaft haben sich als Beschleuniger Aniline, p- und m-Toluidine und Xylidine, die symmetrisch oder asymmetrisch mit Alkyl- oder Hydroxyalkylresten substituiert sind, erwiesen. Beispielhaft können die folgenden bevorzugten Beschleuniger erwähnt werden: N,N-Dimethylanilin, N,N-Diethylanilin, N,N-Diethylolanilin, N-Ethyl-N-ethylolanilin, N,N-Di-isopropanol-p-toluidin, N,N-Diisopropyliden-p-toluidin, N,N-Dimethyl-p-toluidin, N,N-Diethylol-p-toluidin, N,N-Diethylol-m-toluidin, N,N-Diisopropylol-m-toluidin, N,N-Bis(2-hydroxyethyl)toluidin, N,N-Bis(2-hydroxyethyl)xylidin, N-Methyl-N-hydroxyethyl-p-toluidin, Cobaltoctoat, Cobaltnaphthenat, Vanadium(IV)-acetylacetonat und Vanadium(V)-acetylacetonat.

Der Beschleuniger bzw. die Beschleunigermischung wird erfindungsgemäß in einer Menge von 0,05 bis 5,0 Gew.-%, vorzugsweise 1,0 bis 2,5 Gew.-%, bezogen auf das Gesamtgewicht des Reaktivharzes, eingesetzt.

### Inhibitor

In einer weiteren Ausführungsform der Erfindung enthält das Reaktivharz ferner mindestens noch einen Polymerisationsinhibitor zur Sicherstellung der Lagerstabilität und zur Einstellung der Gelzeit. Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind. Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktivharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxylradikale in Betracht.

Als N-Oxylradikale können beispielsweise solche verwendet werden, wie sie in der DE 199 56 509 beschrieben sind. Geeignete stabile N-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Die Polymerisationsinhibitoren können, abhängig von den gewünschten Eigenschaften der Harzzusammensetzungen, entweder allein oder als Kombination von zweien oder mehreren davon verwendet werden. Die Kombination der phenolischen und der nicht-phenolischen Polymerisationsinhibitoren ermöglicht dabei einen synergistischen Effekt, wie die Einstellung einer im Wesentlichen driftfreien Einstellung der Gelzeit des Reaktivharzes.

Der Gewichtsanteil der nicht-phenolischen Polymerisationsinhibitoren liegt vorzugsweise im Bereich von 1 ppm bis 1 Gew.-%, vorzugsweise im Bereich von 10 ppm bis 1 Gew.-%, bezogen auf das Gesamtgewicht des Reaktivharzes.

Bevorzugt handelt es sich bei dem Inhibitor um einen phenolischen Inhibitor. Insbesondere bevorzugt sind Brenzkatechin und Butylbrenzkatechine, wie 4-tert-Butylbrenzkatechin, 4,6-Di-tert-butylbrenzkatechin.

Gemäß einer bevorzugten Ausführungsform enthält das erfindungsgemäße Reaktivharz bis zu 1,0 Gew.-%, weiter bevorzugt 0,0001 bis 0,5 Gew.-%, besonders bevorzugt 0,01 bis 0,1 Gew.-% des Inhibitors, bezogen auf das Gesamtgewicht des Reaktivharzes.

Bevorzugt enthält demnach das erfindungsgemäße Reaktivharz 5 bis 90 Gew.-%, weiter bevorzugt 8 bis 80 Gew.-%, noch weiter bevorzugt 10 bis 60 Gew.-%, besonders bevorzugt 30 bis 45 Gew.-% des Basisharzes, 10 bis 95 Gew.-%, weiter bevorzugt 20 bis 90 Gew.-%, noch weiter bevorzugt 40 bis 90 Gew.-%, besonders bevorzugt 50 bis 70 Gew.-% des mindestens einen Reaktivverdünners, bevorzugt 0,05 bis 5 Gew.-%, besonders bevorzugt 1,0 bis 2,5 Gew.-% und bis zu 1,0 Gew.-%, weiter bevorzugt 0,0001 bis 0,5 Gew.-%, besonders bevorzugt 0,01 bis 0,1 Gew.-% des Inhibitors, bezogen auf das Gesamtgewicht des Reaktivharzes.

Das erfindungsgemäße Reaktivharz wird zur Herstellung von Reaktivharzkomponenten für die chemische Befestigungstechnik eingesetzt.

### Reaktivharzkomponente

Ein weiterer Gegenstand der Erfindung ist daher eine Reaktivharzkomponente, welche zusätzlich zu dem Reaktivharz übliche anorganische oder organische Zuschlagstoffe, wie Füllstoffe, Verdickungsmittel, Thixotropiermittel, nicht reaktive Lösungsmittel, Mittel zur Verbesserung der Fließfähigkeit und/oder Netzmittel enthält. Die Füllstoffe sind vorzugsweise ausgewählt aus der Gruppe bestehend aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat, Polyester, Polyamid oder auch in Form von Mikrokugeln aus Polymeren (Perlpolymerisaten). Bevorzugt und deutlicher verstärkend wirken sich die globulären, inerten Stoffe (Kugelform) aus.

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Die anorganischen oder organischen Zuschlagstoffe können in einer Menge von 20 bis 80 Gew.-%, weiter bevorzugt 25 bis 70 Gew.-%, noch weiter bevorzugt 35 bis 65 Gew.- %, besonders bevorzugt 40 bis 50 Gew.-% in der Reaktivharzkomponente enthalten sein, bezogen auf das Gesamtgewicht der Reaktivharzkomponente.

### Mehrkomponenten-System

Ein weiterer Gegenstand der Erfindung ist ein Mehrkomponenten-System, das mindestens zwei (räumlich) getrennte Komponenten A und B umfasst. Das Mehrkomponenten-System umfasst zwei oder mehr separate, miteinander verbundene und/oder ineinander verschachtelte Behältnisse, wobei das eine die Komponente A, die Reaktivharzkomponente, und das andere die Komponente B, die Härterkomponente, beinhaltet.

Bevorzugt enthält das erfindungsgemäße Mehrkomponenten-System die Reaktivharzkomponente (Komponente A) und die Härterkomponente (Komponente B) in einem Gewichtsverhältnis von etwa 3:1 bis etwa 10:1, weiter bevorzugt 3:1 bis 7:1, mehr bevorzugt von etwa 4:1 bis etwa 6:1. Besonders bevorzugt enthält das erfindungsgemäße Mehrkomponenten-System die Reaktivharzkomponente (Komponente A) und die Härterkomponente (Komponente B) in einem Gewichtsverhältnis von etwa 5:1.

Das Mehrkomponenten-System kann in Form einer Patrone, einer Kartusche oder eines Folienbeutels vorliegen. Bei der bestimmungsgemäßen Verwendung der erfindungsgemässen Reaktivharzmörtel werden die Komponente A und die Komponente B entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingefüllt, wonach die zu befestigende Einrichtung, wie eine Ankergewindestange oder dergleichen, in das mit dem aushärtenden Reaktivharz beschickte Bohrloch eingebracht und entsprechend justiert wird.

### Radikalinitiator

Bevorzugte Härtungsmittel in der Härterkomponente B sind lagerstabile organische Peroxide. Besonders gut geeignet sind Dibenzoylperoxid und Methylethylketonperoxid, ferner tert-Butylperbenzoat, Cyclohexanonperoxid, Lauroylperoxid und Cumolhydroperoxid, sowie tert-Butylperoxy-2-ethylhexanoat.

Die Peroxide werden dabei bevorzugt in Mengen von 0,2 bis 10 Gew.-%, weiter bevorzugt von 0,2 bis 7 Gew.-%, bezogen auf die Reaktivharzkomponente, eingesetzt.

Bei einer besonders bevorzugten Ausführungsform des erfindungsgemäßen Mehrkomponenten-Systems enthält die Komponente A neben dem härtbaren Reaktivharz zusätzlich noch eine hydraulisch abbindende oder polykondensierbare anorganische Verbindung, insbesondere Zement, und die Komponente B neben dem Härtungsmittel noch Wasser. Derartige Hybridmörtelsysteme sind ausführlich in der DE 42 31 161 A1 beschrieben. Dabei enthält die Komponente A vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die Komponente A kann als polykondensierbare anorganische Verbindung auch silikatische, polykondensierbare Verbindungen, insbesondere lösliches, gelöstes und/oder amorphes Siliziumdioxid enthaltende Stoffe umfassen.

Ein weiterer Gegenstand der vorliegenden Erfindung ist die Verwendung von mindestens einem Itaconsäureester der Formel (I) als Reaktivverdünner in einer Reaktivharzkomponente zur chemischen Befestigung eines Verankerungsmittels in einem Bohrloch.

Bevorzugt ist das Verankerungsmittel aus Stahl oder aus Eisen.

Zusätzlich oder alternativ hierzu ist das Bohrloch bevorzugt ein Bohrloch in mineralischem oder metallischem Untergrund, bevorzugt einem Untergrund ausgewählt aus der Gruppe bestehend aus Beton, Porenbeton, Ziegelwerk, Kalksandstein, Sandstein, Naturstein, Glas und Stahl.

Der Vorteil der Erfindung liegt darin, dass durch die Wahl der entsprechenden Itaconsäureester die Aushärteeigenschaften des Reaktivharzes bzw. der diese enthaltenden Reaktivharzkomponente beeinflusst werden können. Darüber hinaus konnte gezeigt werden, dass es möglich ist, konventionelle petrochemie-basierte Bestandteile von Reaktivharzen und damit Bestandteile einer diese Reaktivharze enthaltenden Reaktivharzkomponenten durch biobasierte Komponenten zu ersetzen, ohne dass die Eigenschaften der Reaktivharzkomponente negativ beeinflusst werden.

Die folgenden Beispiele dienen der weiteren Erläuterung der Erfindung.

### AUSFÜHRUNGSBEISPIELE

### Verwendete Komponenten und Abkürzungen

| | | |
|---|---|---|
| Benebiol^{®} HS0840B | Polycarbonatdiol aus Isosorbid (40 mol%) und 1,4-Butandiol (60 mol%) | Mitsubishi Chemical |
| Benebiol^{®} HS0840H | Polycarboantdiol aus Isosorbid (40 mol%) und 1,6-Hexandiol (60 mol%) | Mitsubishi Chemical |
| MMA | Methylacrylsäuremethylester | |
| TEMPOL | 4-Hydroxyl-2,2,6,6-Tetramethylpiperidinyloxyl | |
| Phenothiazin | | |
| HQME | Hydrochinonmonomethylether | |
| Iso | Isosorbid | |
| Iso-DMA | Isosorbiddimethacrylat | |
| MA-Iso-BD-Iso-BD | | |
| NCO-EtMA | 2-Isocyanatoethylmethacrylat | |
| | | |
| Harz 1 | Urethanmethacrylat gemäß Beispiel 1.3 | |
| Harz 2 | Urethanmethacrylat gemäß Beispiel 1.4 | |
| Bisomer^{®} HPMA (HPMA) | 2-Hydroxypropylmethacrylat | Geo Specialty Chemicals |
| Visiomer^{®} BDDMA (BDDMA) | 1,4-Butandioldimethacrylat | Evonik Industries AG |
| DIPPT | Diisopropanol-p-toluidin | BASF |
| TBC | 4-tert-Butylbrenzcatechin | Merck Chemicals GmbH |
| Catechol | Brenzcatechin | Sigma-Aldrich |
| Secar^{®} 80 | Calciumaluminatzement | Kerneos / Imerys S.A. |
| F32 | Quarzsand | Quarzwerke Frechen |
| Cab-O-Sil^{®} TS-720 | Kieselsäure | Cabot Corporation |

### 1. Herstellung der Methacrylate

### 1.1 Umesterung von MMA mit Benebiol^{®} HS0840B

Die Umesterung von MMA lässt sich generell mit Dünnschichtchromatografie (TLC) verfolgen (Probenahme, Abziehen des Überschusses an MMA). Ethylacetat (EtAc)/Heptan (Hept) ist ein geeignetes Lösemittelpaar (3:7 vol/vol). Entwickelt wurden die Platten mittels alkalischer Permanganatlösung. Ausgewählte Rohprodukte wurden nach Entfernung des Rest-MMA mittels Flash-Chromatografie aufgetrennt, und die Strukturen in den einzelnen Fraktionen wurden mittels NMR-Spektroskopie charakterisiert. Weiterhin wurden die Anteile der Fraktionen gravimetrisch bestimmt.

40 g Benebiol^{®} HS0840B (50 mmol), 200 g MMA (1,998 mol, stabilisiert mit 150 ppm HQME), 6 mg TEMPOL (0,035 mmol), 9 mg Phenothiazin (0,045 mmol), sowie 1,5 g K₃PO₄ (0,00715 mmol) wurden in einem 500ml-3-Halskolben (mit Einbuchtungen für bessere Durchmischung) mit Magnetrührer vorgelegt. Benebiol^{®} HS0840B wurde vor dem Einwiegen auf 50 °C erwärmt, halbflüssig eingewogen und sofort mit MMA, dem TEMPOL und Phenothiazin versetzt. Es wurde ein Innenthermometer eingesetzt und eine Schliffolive mit Hahn, anschließend wurde der 3-Halskolben an der Destillationsbrücke befestigt. Als Vorlage diente ein 250-ml Rundkolben mit Schliffhahn. Zwischen Destillationsbrücke und Membranpumpe wurde eine Kühlfalle gesetzt, gekühlt mit einem Trockeneis/Aceton-Gemisch (T ≈ -76 °C). Mit einem Ölbad wurde die homogene Mischung zügig auf 70 °C, später 90-91 °C aufgeheizt. Nach etwa 30 min wurde eine Temperatur T_{Sumpf} von ca. 65 °C erreicht und ein Vakuum von 420 mbar eingestellt. Mit dem Beginn des Siedens wurde der Start der Reaktion definiert. Es wurde ein Rücklaufverhältnis von etwa 8:1 eingestellt. Das während der Reaktion entstehende Methanol bildet mit MMA ein Azeotrop, welches bei 64 °C unter Normaldruck siedet und 82 Gew.-% Methanol enthält.

Es wurden Proben nach 2, 4, 6 und 8 h genommen und mittels TLC und NMR analysiert.

Nach 2 h Reaktionszeit wurde beobachtet, dass der Katalysator Klumpen gebildet hatte, deshalb wurden noch einmal 1,5 g Katalysator nachgegeben. Die Reaktion wurde mittels 1H-NMR-Spektroskopie und TLC verfolgt.

Nach 8h wurde die Reaktion abgebrochen. Die Mischung wurde durch Filtration vom Katalysator befreit, und das überschüssige nicht reagierte MMA wurde am Rotationsverdampfer abgezogen. Spuren von Rest-MMA wurden durch Behandlung im Ölpumpenvakuum (< 1 mbar) entfernt. Vor dem Abziehen des Acetons wurden 50 ppm HQME zur Stabilisierung des Reaktionsprodukts zugegeben.

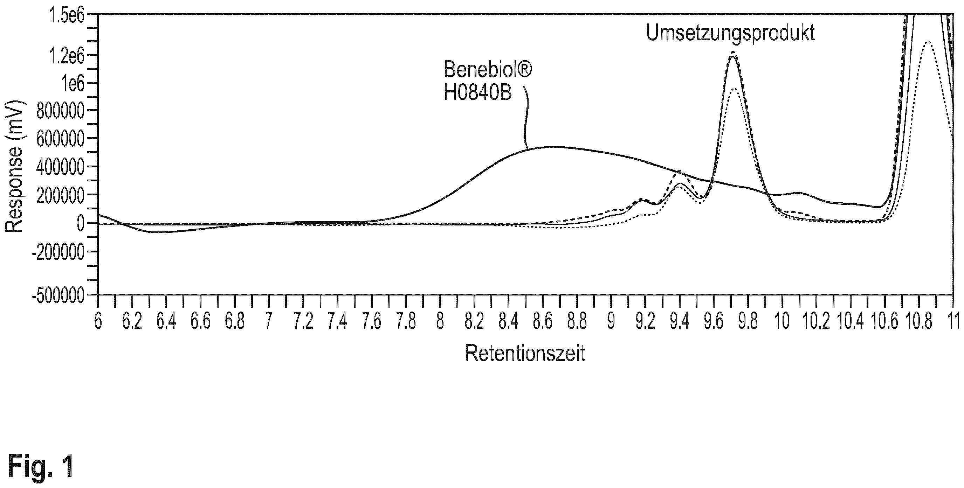

Es wurde ein niedrigviskoses Produkt erhalten, welches auf einen starken Abbau während der Reaktion wies. Der Abbau der Molmasse während der Reaktion wurde durch Größenausschlußchromatografie-(SEC)-Messungen bestätigt (s. Fig. 1). Die hochmolekularen Anteile der Ausgangsstoffe bei niedrigen Retentionszeiten sind fast vollständig verschwunden.

Ein Vergleich der NMR-Spektren des Ausgangsstoffes und der Reaktionsprodukte nach 2 bzw. 8 h ergab, dass die Signale für Protonen der Iso-Carbonat-Strukturen zwischen 4,32 und 5,15 ppm fast vollständig verschwunden waren. Die neugebildeten Iso-Strukturen zeigten alle die für Iso-DAM typischen ¹H-NMR Signale in den erwarteten Verschiebungsbereichen (**Fig**. **2**). Die TLC-Untersuchungen bestätigten diesen Befund. Während das Benebiol^{®} HS0840B in dem gewählten Laufmittel Hept/EtAc 7:3 am Startpunkt verbleibt, bilden sich mit fortschreitender Zeit mehr und mehr niedermolekulare Produkte. Der intensivste Fleck in den Chromatogrammen der einzelnen Proben ist jeweils für Iso-DMA. 1,4-BDDMA wurde zum Vergleich mitlaufen gelassen. Die Iso-Carbonatstrukturen wirken aktivierend für die Umesterung mit MMA. Zur Aufklärung weiterer Strukturen, besonders auch der oligomeren Produkte, wurde die Probe mittels Flash-Chromatografie aufgetrennt und ausgewählte isolierte Fraktionen mittels NMR-Spektroskopie untersucht.

Als Hauptkomponenten wurden in der Mischung gefunden: Iso-DMA (BG 7), 1,4-BDDMA (BG2), 4-Methylcarbonato-butylmethacrylat (BG5) und Dibutylenglycoldimethacrylat (BG8), 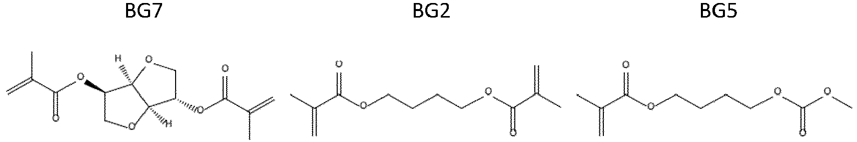 und andere Methacrylate (BG 9), bei denen 2 Butandioleinheiten über Ethergruppen dimerisiert sind

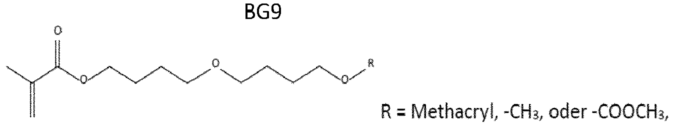

Ab den Fraktionen 11 wurden MA-Iso-BD-Iso-BD-Strukturen identifiziert, wobei die Verschiebungen auf Carbonatgruppen an Iso und BD hinweisen.

Insgesamt wurden 61,4 g Produkt isoliert, das entspricht einer Ausbeute von 131 %. Die Ausbeute muss > 100 % sein, da ein Kettenabbau erfolgte und die Abbauprodukte mit überschüssigem MMA weiter reagierten.

### 1.2 Umesterung von MMA mit Benebiol^{®} HS0840H

Die Umesterung erfolgte analog 1.1. Es wurden 650 g MMA vorgelegt in einem 2-I-3-Halskolben (mit Einbuchtungen für bessere Durchmischung) mit Magnetrührer, 160g des auf 70 °C erhitzten Benebiol^{®} HS0840H (120 mmol) zugewogen. Zu dieser Mischung wurden 24,1 mg TEMPOL (0,14 mmol), 36,3 mg Phenothiazin (0,182 mmol) zugegeben und unter Rühren eine homogene Mischung hergestellt. Anschließend wurden zu der homogenen Mischung 3,31 g K₃PO₄ (16,61 mmol) zugegeben und mit MMA auf total 1000,4 g MMA (10 mol, stabilisiert mit 150 ppm HQME) aufgefüllt. Es wurde zügig aufgeheizt, die Reaktion startete bei einer Öltemperatur T_{Öl} von etwa 65 °C.

Es wurden Proben nach 2, 4, 6 und 8h genommen für TLC und NMR. Nach 2 h Reaktionszeit wurde beobachtet, dass der Katalysator Klumpen gebildet hatte, deshalb wurden noch einmal 2,57 g Katalysator nachgegeben. Die Reaktion wurde mittels 1H-NMR und TLC verfolgt.

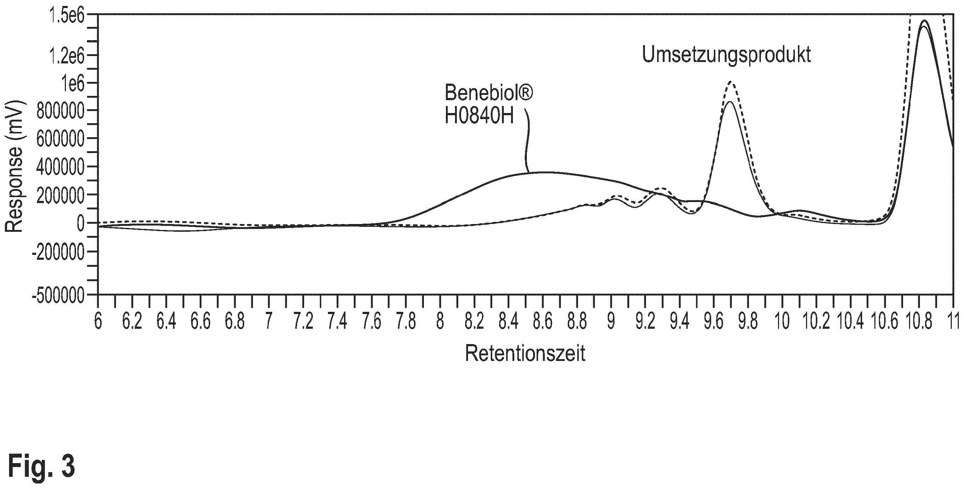

Nach 8h wurde die Reaktion abgebrochen. Es wurden während der Reaktion 95 g MMA abdestilliert (für Wiederverwendung) und 32,5 g MMA in der Kühlfalle (KF) ausgefroren (verworfen, da mit Methanol verunreinigt). Die Mischung wurde durch Filtration vom Katalysator befreit, der Filterkuchen mit 50 g MMA gewaschen und das überschüssige, nicht reagierte MMA wurde anschließend am Rotationsverdampfer abgezogen (total 800 g MMA für Wiederaufbereitung, und 63 g in K kondensiert). Spuren von Rest-MMA wurden durch Behandlung im Ölpumpenvakuum (< 1 mbar) entfernt. Während der viertägigen Behandlung wurden weitere 47 g MMA für die Wiederaufbereitung in der Kühlfalle kondensiert. Es wurde 227,1 g von einem niedrigviskosen Produkt erhalten. Auch hier lag die Ausbeute bei > 100 %, da ein Kettenabbau erfolgte und die Abbauprodukte mit überschüssigem MMA weiter reagierten. Der Abbau der Molmasse während der Reaktion wurde auch hier durch SEC-Messungen bestätigt (**Fig. 3**). Die hochmolekularen Anteile der Ausgangsstoffe bei niedrigen Retentionszeiten sind fast vollständig verschwunden.

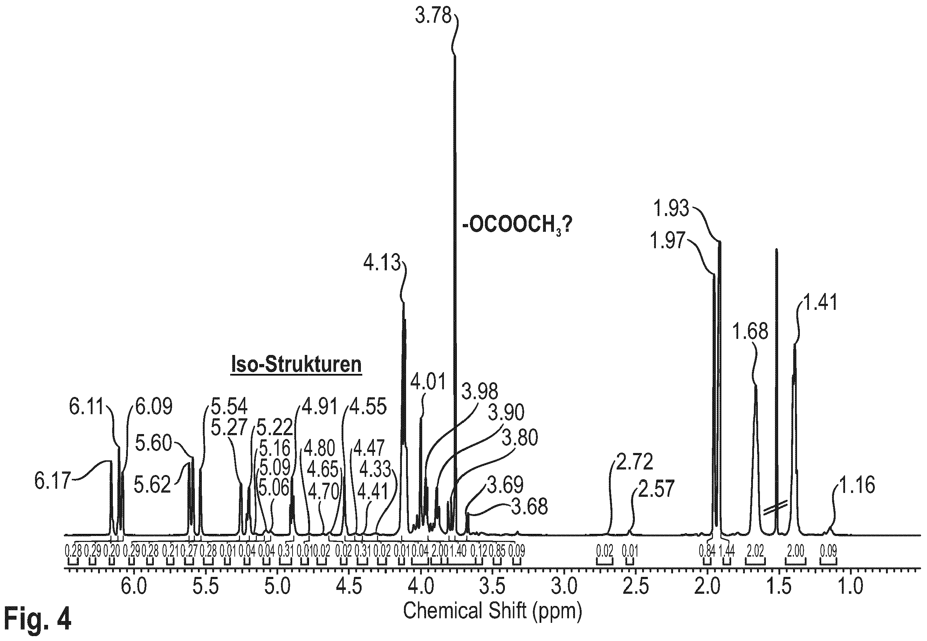

Ein Vergleich des NMR-Spektrums der Reaktionsprodukte nach 8 h mit dem Ausgangsstoff ergab, wie bei Benebiol^{®} HS0840B, dass die Signale für Protonen der Iso-Carbonat-Strukturen zwischen 4,32 und 5,15 ppm fast vollständig verschwanden (**Fig. 4**). Die neugebildeten Iso-Strukturen zeigten ebenfalls die für Iso-DMA typischen Verschiebungen. TLC-Untersuchungen bestätigten diesen Befund. Während das Benebiol^{®} HS0840H in dem gewählten Laufmittel Hept/EtAc 7:3 am Startpunkt verbleibt, bilden sich mit fortschreitender Zeit mehr und mehr niedermolekulare Produkte. Der intensivste Fleck in den Chromatogrammen der einzelnen Proben ist jeweils für Iso-DMA.

Die Iso-Carbonatstrukturen wirken aktivierend für die Umesterung mit MMA. Zur Aufklärung weiterer Strukturen, besonders auch der oligomeren Produkte, wurde die Probe ebenfalls mittels Flash-Chromatografie aufgetrennt und ausgewählte isolierte Fraktionen mittels NMR-Spektroskopie untersucht. Details werden hier nicht gezeigt. Bei der Umesterung von MMA mit Benebiol^{®} HS0840H entstand relativ wenig 1,6-Hexandioldimethacrylat, mehr 6-Methylcarbonato-hexylmethacrylat (beides zusammen ca. 14 Gew.-%) und wiederum relativ viel Iso-DMA (ca. 40 Gew.-%). Die restlichen 43 Gew.-% sind Oligomere mit Methacrylatgruppen und auch Methylcarbonatendgruppen. In der Kette dieser Oligomere sind Iso und Hexandiol über Carbonatgruppen verbunden.

### 1.3 Synthese von Urethanmethacrylat aus Benebiol^{®} HS0840B

Die Reaktion wurde in einem Reaktionskalorimeter RC-1 (Mettler-Toledo, 1,6 I maximales Arbeitsvolumen) durchgeführt, s. Abbildung 14. Als Rührer wurde ein Ankerrührer mit Strombrecher genutzt. Vor Zugabe des PC-Diols wurde der Reaktor auf 50 °C erhitzt, mit 300g Aceton, 33, 6 mg (0,1951 mmol) TEMPOL und 31,3 mg (0,142 mmol) BHT beschickt, s. Abbildung 15. Vom auf 40 °C im Trockenschrank vorgewärmten Benebiol^{®} HS0840B wurden 309 g (386,25 mmol) in ein 1-I-Becherglas eingewogen und über einen Trichter in den Reaktor gegossen. Dabei wurden mit der Heißluftpistole ständig der Trichter und das Becherglas mit dem PC-Diol erwärmt. Die Reste im Becherglas wurden mit Aceton in den Reaktor gespült. Total wurden 975 ml Aceton eingesetzt, zuzüglich 10 ml für die des Katalysators und 20 ml Aceton zum Spülen des Tropftrichters nach der Isocyanatzugabe. Die Zugabe des Diols und das anschließende Herstellen einer homogenen Mischung dauerte etwa 53 min. Vor Zugabe des Isocyanats wurde der Reaktor auf 25 °C abgekühlt und das Isocyanat (121,32 g, 782 mmol) mittels Tropftrichter über 32 min zugetropft. Bei Raumtemperatur wurden 283 mg Katalysator Dioctylzinndilaurat (DOTL) in 10 ml Aceton zugespritzt und die Mischung für weitere 15 min bei 25 °C gerührt. Danach wurde auf 40 °C aufgeheizt, 1 h gerührt bei 40 °C, aufgeheizt auf 50 °C und 5 h bei 50 °C gerührt. Wegen der Steigerung des Drucks im Reaktor nach dem Aufheizen auf 50 °C, wurde der Reaktor vorsichtig entspannt und dies mehrfach wiederholt. Der vorübergehende Ausfall der Heizung (etwa 15 min) wurde durch längere Rührzeit kompensiert. Nach 4h bei 50 °C wurden weitere 200 mg Katalysator zugegeben. Nach weiteren 2h bei 50 °C wurde mittels ATR-FTIR eine deutliche Abnahme der Intensität der NCO-Bande registriert. Anschließend wurde auf 55 °C aufgeheizt. Nach 2,5 h Rühren bei 55 °C wurde die Mischung auf RT abgekühlt und über Nacht stehen gelassen. Es waren noch Spuren NCO mittels ATR-FTIR detektierbar. Zum Neustart am nächsten Tag wurde zügig auf 55 °C erhitzt und für 2 h bei dieser Temperatur gerührt. Anschließend wurde auf Raumtemperatur abgekühlt, mittels ATR-FTIR das Ende der Reaktion detektiert. Insgesamt dauerte die Reaktion etwa 10,8h, zuzüglich der Zeiten für Lösen/Dosierung Isocyanat/ Hochheizen/Abkühlen. Das Produkt wurde aus dem RC-1 abgelassen, filtriert und anschließend das Aceton am Rotationsverdampfer, später im Ölpumpenvakuum (Vakuumtrockenschrank, 4,5 Tage bei 40 °C bei < 1 mbar) entfernt.

Im Finalprodukt verblieben noch ca. 9 mol-% (≈ 0,5 Gew.-%) Aceton als Verunreinigung. Für Folgeversuche scheint sich die Verwendung des ohnehin im Harzsystem genutzten Vernetzers 1,4-BDDMA als Lösemittel anzubieten. Dann entfällt die Entfernung von Restlösemittel. Der Gehalt an UMA-HS0840B im 1,4-BDDMA kann NMRspektroskopisch bestimmt werden.

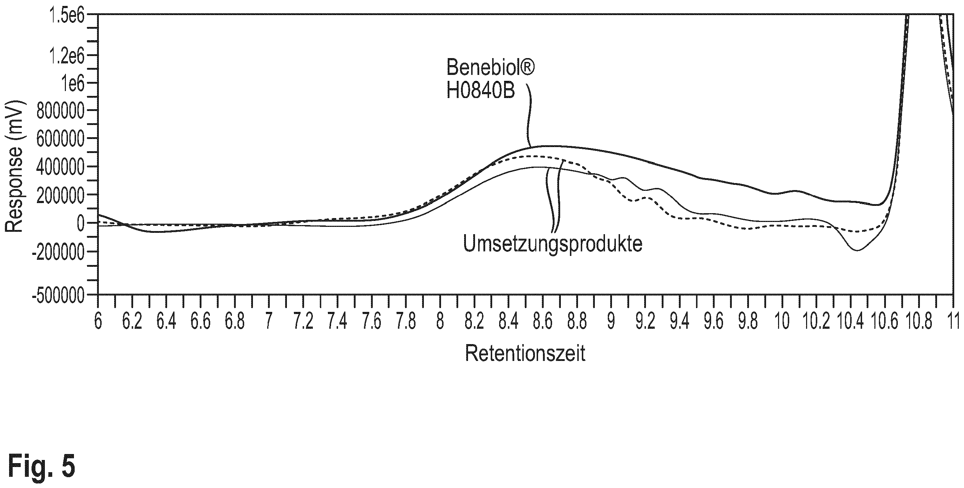

Während der Reaktion trat kein Abbau der Polymerkette auf (Fig. 5).

### 1.4 Synthese von Urethanmethacrylat aus Benebiol^{®} HS0840H

In einem 100-ml-3-Halskolben mit Innenthermometer, Vigreuxkolonne (verschlossen mit Aufsatz für Stickstoffspülung) und Magnetrührer wurde das Oligo-PC (8 g, 10 mmol) in Aceton gelöst (25 ml). Dazu wurden TEMPOL (2,1 mg; 0,012 mmol) und BHT (0,8 mg; 0,0038 mmol) addiert. Durch leichtes Erwärmen mit der Wärmepistole wurde eine homogene Mischung hergestellt. Vor der Zugabe des Isocyanats wurde die Lösung auf Raumtemperatur abgekühlt. 3,25 g NCO-EtMA (20,9 mmol) wurde in 2 Portionen von 1,75 und 1,5 g vorsichtig unter Rühren zugespritzt. Anschließend erfolgte die Zugabe von 2,1 mg DOTL in wenig Aceton. Die Mischung wurde insgesamt 16h@Raumtemperatur, 135 min bei 40 °C und 195 min bei 50 °C unter einem leichten Stickstoffstrom gerührt, bis im ATR-FTIR keine NCO-Gruppen mehr nachweisbar waren. Nach der Reaktion wurde das Aceton am Rotations-verdampfer abgezogen, später im Ölpumpenvakuum (Kolben, 5 Tage bei 40 °C bei < 1 mbar). Im Produkt verblieben etwa 28 mol % (≈ 2 Gew.-%) Aceton. Bei der Synthese im großen Maßstab enthielt das Produkt nach 4,5 Tagen Behandlung im Vakuumtrockenschrank bei 40 °C und p > 1 mbar noch 11 mol-% (≙ 0,64 Gew.-%) Aceton. Dieses Produkt wurde auch für die Applikationstests eingesetzt.

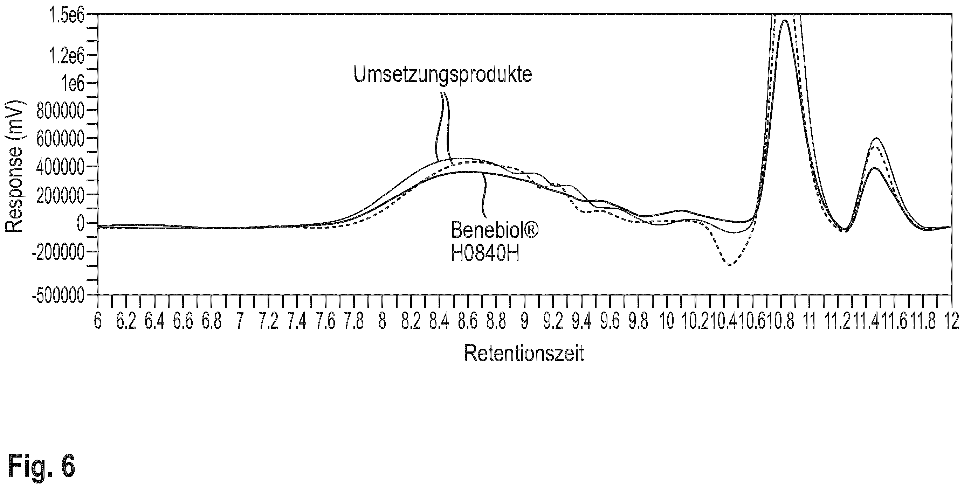

SEC-Untersuchungen ergaben, dass währen der Modifizierung mit Methacrylatgruppen kein Abbau der Polymerkette erfolgte (**Fig. 6**).

### Verwendung der aus Beispiel 1.3 und 1.4 erhaltenen Urethanmethacrylatharze als Basisharz in einer Reaktivharzmischung für die chemische Befestigung.

### 2. Herstellung der erfindungsgemäßen Reaktivharzmischungen R1 und R2

Zunächst wurden die aus den Beispielen 1.3 (Harz 1) und 1.4 (Harz 2) erhaltenen Harze jeweils mit HPMA und BDDMA gemischt und anschließend die restlichen Bestandteile, wie aus Tabelle 3 ersichtlich, zugegeben und durch Rühren gelöst.

**Tabelle 3: Zusammensetzung der erfindungsgemäßen Reaktivharzmischungen R1 und R2**

| | **R1** [Gew.-%] | **R2** [Gew.-%] |
|---|---|---|
| Harz 1 | 37,3 | - |
| Harz 2 | - | 37,3 |
| HPMA | 20,1 | 20,1 |
| BDDMA | 40,0 | 40,0 |
| DIPPT | 2,2 | 2,2 |
| Catechol | 0,3 | 0,3 |
| TBC | 0,1 | 0,1 |

### 3. Herstellung der erfindungsgemäßen Mörtelmassen M1 und M2

Zur Herstellung der erfindungsgemäßen Mörtelmassen wurden die Reaktivharzkomponenten R1 und R2 mit den Füllstoffen und Kieselsäuren, wie in Tabelle 3 gezeigt, gemischt und in einem Dissolver (Fa. PC Laborsystem GmbH, 8 min; 3500 U/min) unter Vakuum (80 mbar) zu einer luftblasenfreien pastösen Masse homogenisiert.

**Tabelle 3: Zusammensetzung der erfindungsgemäßen Mörtelmassen M1 und M2**

| | **M1** [Gew.-%] | **M2** [Gew.-%] |
|---|---|---|
| R1 | 34,5 | |
| R2 | | 34,5 |
| Calciumaluminatzement | 18,5 | 18,5 |
| Quarzsand | 44,2 | 44,2 |
| Kieselsäure | 2,8 | 2,8 |

### Bestimmung der Referenzverbundspannungen der Zweikomponentenmörtel Z1 und Z2

Zur Applikation wurden die Mörtelmassen M1 und M2 als A-Komponenten in ein 5:1 Laborkartuschensystem gefüllt. Als B-Komponente wurde die Härterkomponente von Hilti HIT-HY 200-A verwendet.

Zur Bestimmung der mit den Zweikomponentenmörtel Z1 und Z2 erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der erfindungsgemäßen Zweikomponenten-Mörtelmasse in C20/25 Betonplatten eingedübelt wurde. Zur Bestimmung der Verbundspannung wurde nach einer Aushärtezeit von 24 Stunden bei Raumtemperatur die Versagenslast durch zentrisches Ausziehen der Ankergewindestange mit enger Abstützung ermittelt. Die mittlere Versagenslast wurde anhand der Ergebnisse von fünf Ankern bestimmt.
Vergleichsbeispiel V1: Hilti HIT-CT 1
Vergleichsbeispiel V2: Hilti HIT-HY 200-A

| | **V1** | **V2** | **Z1** | **Z2** |
|---|---|---|---|---|
| Referenzverbundspannung in N/mm² | 15,8 | 31,3 | 27,2 | 25,8 |

### Kurze Beschreibung der Figuren

- **Figur 1**: SEC-Kurven von Benebiol^{®} HS0840B und 3 Chargen der Umesterung mit MMA

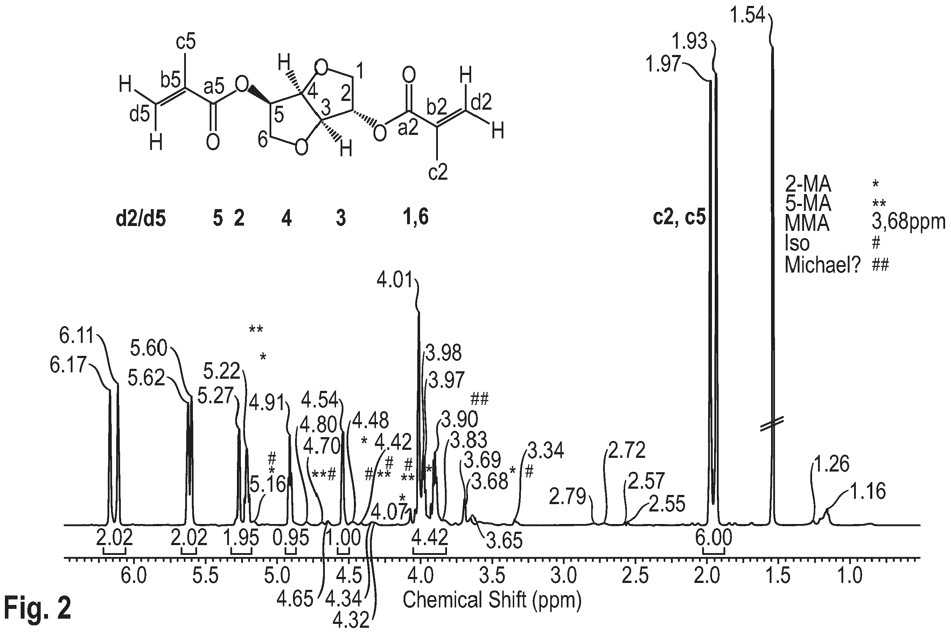

- **Figur 2**: ¹H-NMR-Spektrum des Iso-DMA (in CDCl₃)
- **Figur 3**: SEC-Kurven von Benebiol^{®} HS0840H und 2 Chargen der Umesterung mit MMA
- **Figur 4**: ¹H-NMR-Spektrum der Umesterung von MMA mit Benebiol^{®} HS0840H (in CDCl₃) 8h Reaktionszeit, Produkt nach erfolgreicher Behandlung im Ölpumpenvakuum zur Entfernung des Rest-MMA (kein Signal bei 3,76 ppm ist von O-CH₃ des Rest-MMAs)
- **Figur 5**: SEC-Kurven der Umsetzungsprodukte von Benebiol^{®} HS0840B mit NCO-EtMA im 10-g-Maßstab und im 400-g-Maßstab
- **Figur 6**: SEC-Kurven der Umsetzungsprodukte von Benebiol^{®} HS0840H mit NCO-EtMA im 10-g-Maßstab und im 400-g-Maßstab

## Patentansprüche

1. Reaktivharz, umfassend wenigstens ein Basisharz, welches ein Methacrylat auf Basis von Polycarbonatdiolen umfasst.

2. Reaktivharz nach Anspruch 1, wobei die Polycarbonatdiole solche auf Basis von Zuckerderivaten mit mindestens einer cyclischen Ethergruppe oder Alkandiolen sind.

3. Reaktivharz nach Anspruch 2, wobei das Zuckerderivat mit mindestens einer cyclischen Ethergruppe Isosorbid ist.

4. Reaktivharz nach einem der vorherigen Ansprüche, wobei die Polycarbonatdiole erhältlich sind durch
(i) Umesterung von Methylmethacrylat mit Polycarbonatdiolen auf Basis von Isosorbid und Alkandiolen, wodurch Methacrylate erhalten werden,
oder
(ii) durch die Reaktion von Polycarbonatdiolen aus Basis von Isosorbid oder Alkandiolen mit 2-lsocyanatoethylmethacrylat, wodurch Urethanmethacrylate erhalten werden.

5. Reaktivharz nach einem der vorhergehenden Ansprüche, wobei das Methylmethacrylat auf Basis von Polycarbonatdiolen zumindest teilweise, bevorzugt vollständig biogen ist.

6. Reaktivharz nach einem der vorhergehenden Ansprüche, weiterhin umfassend mindestens einen Reaktivverdünner.

7. Reaktivharz nach einem der vorhergehenden Ansprüche, weiterhin umfassend mindestens einen Beschleuniger.

8. Reaktivharz nach einem der vorhergehenden Ansprüche, weiterhin umfassend mindestens einen Inhibitor.

9. Reaktivharz nach einem der vorhergehenden Ansprüche, enthaltend
i) 50 bis 95 Gew.-% des Basisharzes,
ii) 5 bis 40 Gew.-% des mindestens eines Reaktivverdünners,
iii) 0,05 bis 5 Gew-.% des mindestens einen Beschleunigers und
iv) bis zu 1,0 Gew.-% des mindestens einen Inhibitors,
jeweils bezogen auf das Gesamtgewicht des Reaktivharzes.

10. Reaktivharzkomponente, umfassend ein Reaktivharz nach einem der Ansprüche 1 bis 9 und mindestens einen anorganischen oder organischen Zuschlagstoff.

11. Reaktivharzkomponente nach Anspruch 10, wobei der mindestens eine anorganische oder organische Zuschlagstoff ausgewählt ist aus der Gruppe bestehend aus Füllstoffen, Verdickungsmitteln, Thixotropiermitteln, nicht reaktiven Lösungsmitteln, Mitteln zur Verbesserung der Fließfähigkeit, Netzmitteln oder Gemischen aus diesen.

12. Reaktivharzkomponente nach Anspruch 10 oder 11, enthaltend 40 bis 70 Gew.-% des mindestens eines anorganischen oder organischen Zuschlagstoffs, bezogen auf das Gesamtgewicht der Reaktivharzkomponente.

13. Mehrkomponenten-System, umfassend
A) die Reaktivharzkomponente nach einem der Ansprüche 10 bis 12, und
B) eine Härterkomponente.

14. Mehrkomponenten-System nach Anspruch 13, wobei die Härterkomponente einen Radikalinitiator als Härtungsmittel und gegebenenfalls anorganische und/oder organische Zuschlagstoffe enthält.

15. Verwendung von mindestens einem Methacrylat auf der Basis von Polycarbonatdiolen als Basisharz in einem Reaktivharz zur chemischen Befestigung.

16. Verwendung nach Anspruch 15, wobei die chemische Befestigung die Befestigung eines Verankerungsmittels in einem Bohrloch ist, und das Verankerungsmittel bevorzugt aus Stahl oder Eisen ist.
